# EUROPEAN PATENT APPLICATION

(11) **EP 2 881 205 A1**
(43) Date of publication of application: **10.06.2015**
(21) Application number: 13195721.9
(22) Date of filing: 04.12.2013
(51) Int. Cl.: B23H 9/10, B23K 1/00, B23K 1/20, B23P 6/00, B23H 3/00, B23K 26/34

(54) **Method for manufacturing a braze joint gap and method for brazing or soldering**

(71) Applicant: ALSTOM Technology Ltd, 5400 Baden (CH)
(72) Inventor: Stankowski, Alexander, 5303 Wuerenlingen (CH); Hoevel, Simone, 5426 Lengnau (CH)
(74) Representative: Alstom Technology Ltd

(57) **Abstract**

Method for manufacturing a braze joint gap for connecting a first part (10) to a second part (14) via brazing or soldering, comprising the steps of: adding microstructural elements (28) to a first connecting surface of the first part (10) to be connected to the second part (14) via brazing or soldering; aligning the second part (14) and the first part (10) or an electrode part having a tool contour, which is identical to the contour of the first connecting surface; electro-chemically machining (ECM) or precise electro-chemically machining (PECM) a second connecting surface of the second part (14) by polarizing the first part (10) or the electrode part as a cathode (-) and the second part (14) as an anode (+).

## Description

The invention is directed to a method for manufacturing a braze joint gap for connecting a first part to a second part via brazing or soldering and a method for brazing or soldering together a first part and a second part.

In the technical area of industrial gas turbines (IGT) the individual components of such industrial gas turbines are subject to thermal and mechanical stress. Therefore, it is often necessary to repair or replace parts of an industrial gas turbine. It is therefore known, to take an ex-service part of such a gas turbine for example a gas turbine vane or a gas turbine blade and cut away a section which has been subject to corrosion or damage. Such a section is then replaced by a new turbine blade section which is usually called a coupon. Such coupons are commonly connected to the turbine blade or turbine vane in order to repair or re-concept the ex-service component or to manufacture modular/hybrid parts. The connection is usually achieved by a brazing or soldering process. However, when "coupon brazing" the coupon to the turbine vane or blade, quality deviations with respect to reproducibility can occur because of relative movement between the coupon and the base section of the IGT part during the heating up and cooling down phase of the brazing process due to the fact that the areas to be connected have different heat capacities.

The replacement coupons are often made or manufactured via a generative method such as 3D printing. Because of differences in grain size of the metallic powder and because of non-optimum braze alloy distribution and interdiffusion in the braze joint gap there is a high variance with large deviations in quality.

Another possibility to connect a turbine blade section (coupon) to an ex-service component of a turbine blade or turbine vane is to weld the two parts together. However, this approach is unsuited because thin walled and extended sections cannot be joined with the quality and repeatability which is needed for those parts. Moreover, welding is a single piece process, whereas brazing or soldering can be done in a batch process, wherein several parts can be processed at the same time. Therefore, welding takes significantly longer than brazing or soldering.

It is therefore an object of the present invention to overcome the problems known in the state of the art and provide a method for manufacturing a braze joint gap which minimizes the deviations and quality problems during the brazing or soldering process.
This object is achieved with the method for manufacturing a braze joint gap for connecting a first part to a second part via brazing or soldering according to claim 1. This method is comprising the steps of: adding microstructural elements to a first connecting surface of the first part to be connected to the second part via brazing or soldering; aligning the second part and the first part or an electrode part having a tool contour, which is identical to the contour of the first connecting surface; electro-chemically machining (ECM) or precise electro-chemically machining (PECM) a second connecting surface of the second part by polarizing the first part or the electrode part as a cathode and the second part as an anode.

Electro-chemically machining (ECM) or precise electro-chemically machining (PECM) is better suited than electrical discharge machining (EDM) because the tool electrode is not subject to erosion. The first part or the electrode part which is used as a cathode serves as a tool electrode. During ECM or PECM, oxide scales, or surface micro cracking or other mechanical or thermal impact can be avoided. An infeed movement is performed on the first part or on the electrode part which is moved towards the second part wherein material is eroded from the second part. A high current is passed between the two electrodes, meaning the first part or the electrode part and the second part. An electrolytic material removal process is started, wherein the negatively charged electrode (cathode), a conductive fluid (electrolyte) and a conductive work piece (anode) are used. The electrode material can be varied in a wide spectrum as long as sufficient electric conductivity is given. As electrolyte, normally an aqueous NaCl or NaNO₃ solution or any other combination thereof is used. Alternative conductive aqueous solutions can also be selected. By using ECM or PECM methods, it is possible to generate macro- and microstructures in parallel. The tolerances, which can be achieved by ECM or PECM are ± 3 µm, wherein the roughness is in the area of Ra < 0,05 µm. In order to conduct the ECM/PECM process electrically conductive materials such as metals, intermetallic alloys, ceramics, ceramic matrix composites (CMCs) or metal matrix composites (MMCs) can be used.

The travel speed of the infeed movement can be varied continuously between 0,1 to 2 mm/min. All crucial process parameters, such as electrolyte concentrations (including pH and conductivity values), fluid temperature and current or voltage can be monitored throughout the whole process.

The ECM tool electrode, meaning the first part or the electrode part, can be guided along a desired path close to the second part but without touching the second part. Unlike electronic discharge machining (EDM) no sparks are created. High metal removal rates are possible with ECM or PECM, wherein thermal or mechanical stress, which might otherwise be transferred to the parts can be avoided. A high surface finish quality can also be achieved.

Preferably, the parts to be connected are a vane or blade of an industrial gas turbine IGT and a coupon (turbine blade section) for repair or re-conception of the vane/blade.

The microstructural elements which are added to the first part are preferably manufactured via machining, casting, sintering or additive manufacturing. The alignment is performed in the position the first and second part will be connected in. When conducting the ECM/PECM process with a separate electrode part, which is different from the first part, the electrode part has a contour identical to the contour of the first connecting surface. Thus, microstructural elements which are provided on the first connecting surface are also provided on the surface of the electrode part. Advantageously, the microstructural elements are oriented to the connecting surface in an angle of 0 to 90°. By providing those microstructural elements, a lateral and/or longitudinal movement between the parts to be connected can be avoided during the brazing or soldering process. The microstructural elements are preferably provided in the size dimension of the braze joint gap meaning they extend about 30 to 200 µm from the first surface.

The ECM/PECM process provides an additional advantage in contrast to the welding technology. When the first part is used as a cathode and no additional electrode part such as a graphite electrode needs to be used, the first connecting surface of the first part can be used as a tool surface. Geometrical distortions due to residual stresses, varying surface roughness, depending on the orientation of the first part during the manufacturing process or caused by powder quality and selective laser melting (SLM) process parameters when conducting generative manufacturing can be overcome because the first and second part can be manufactured with corresponding first and second surfaces. With ECM or PECM it is possible to overcome small and large deviations when adapting two parts to be connected to each other. It is further possible to compensate deviations in the initial state and create a homogenous braze joint gap because the electrical flux lines are closer in areas with smaller gap distance. Therefore, more material erosion and/or different speed of material dissolution occurs in areas with different gap distance.

Advantageously, selective laser melting (SLM) is used to add the microstructural elements to the first part and/or to manufacture the first part. This means the first part can also be manufactured by using selective laser melting (SLM), wherein the microstructural elements are made at the same time. It is also possible to manufacture the first part via milling and add the microstructural elements in a successive process via selective laser melting (SLM). Selective laser melting (SLM) is an additive manufacturing process, wherein a high powered laser beam is used to create 3-dimensional metal parts by fusing fine metallic powders together. When an electrode part is used for the ECM/PECM process instead of the first part, the electrode part can be made of different materials such as graphite. The microstructural elements which also need to be applied to the electrode part made of graphite, can be machined via cutting, milling or via sintering for example. However, using a separate electrode part, such as a graphite electrode is only possible, when the first and second parts to be connected do not exhibit significant geometrical deviations because other deviations cannot be compensated since the first part is not used as electrode during the ECM/PECM process.

Another advantageous embodiment of the method is characterized in that protrusions or recesses are formed on the connecting surface as microstructural elements. Advantageously, such protrusions are forming positive/convex microstructural elements, wherein recesses are forming negative/concave microstructural elements.

It is particularly preferred that the microstructural elements are provided as rails, ribs, zigzag or staggered lines, continuous, discontinuous or dashed lines.

In another particularly preferred embodiment of the method, electrolyte channels are incorporated into the first part. These electrolyte channels are incorporated into the first part before conducting the ECM/PECM process. Preferably, the channels are designed such that the electrolyte flux can be adapted to the electrode part design and electrolyte can be directed to the gap between the first connecting surface and the second connecting surface. When a separate electrode part is used for the ECM/PECM process, this gap is formed between the tool contour of the electrode part and the second connecting surface.

It is particularly preferred that a top frame, preferably in the form of a ridge, made of plastic or a non-conductive material is adapted to the form of the first part such that electrolyte can be directed to the gap between the first connecting surface and the second connecting surface. The top frame preferably comprises inlet and outlet channels for directing the electrolyte, wherein the inlet channels are directing the electrolyte fluid to the gap between the first and second surfaces and wherein the outlet channels are directing the electrolyte away from the gap. It is particularly preferred, that the diameter of the outlet channels is bigger than the diameter of the inlet channels.

It is another advantageous embodiment of the method that the top frame is manufactured via a generative manufacturing process. Such a generative manufacturing process can be laser sintering. However, when a top frame made of plastic is used, it is particularly preferred to use 3D printing to manufacture the top frame.

It is another advantageous embodiment of the method that the alignment is achieved by using geometrical, optical or numerical tools. Optical or geometrical measuring can be used in order to align the first and second part. Advantageously, mechanical fastening devices, preferably clamps, grippers or chucks, are used to fasten the first and second part. Holding forces are applied to the two parts in order to prevent any relative movement during the ECM/PECM process apart from the infeed movement of the cathode towards the anode or an overlapping pulsed mechanical oscillation movement along the Z-axis.

Preferably, the electro-chemical machining (ECM) process or the precise electro-chemical machining (PECM) process is carried out as a pulsed process, wherein the electric source is operated in a pulsed mode.

It is particularly preferred, when a mechanical oscillation is superimposed on the electric source pulsation. Preferably, the cathode is being oscillated. Because of the oscillation and optimum feed of fluid and an effective eduction of chemically loaded electrolyte can be achieved.

It is another advantageous embodiment of the method that an masking material is applied to sections of the second connecting surface prior to performing the ECM or PECM process. By masking or coating sections or areas with masking material a masking of the areas which shall not be subject to the ECM/PECM process can be achieved and the galvanic material removal in coated or masked areas can be controlled. Such masked areas are not eroded/dissolved when conducting the ECM/PECM process.

The above stated object is also achieved by a method for brazing or soldering together a first part and a second part according to claim 13. This method is comprising the steps of manufacturing a braze joint gap by using the method according to any one of the claims 1 to 12. The method is further comprising the step of filling or wetting the braze joint gap with braze alloy. The microstructural elements which have been added to the first part and have also been added as a negative form to the second part via ECM or PECM process, can be used to interlock the first and second parts to be connected. The brazing or soldering process is preferably done in a batch process, wherein the parts to be connected are heated. The braze alloy is then liquefied and used to fill the braze joint gap. After the heating process, a cooling down process is started, wherein the braze alloy is solidificated. The above method for brazing or soldering is particularly preferred for long and wide braze joints because the first and the second surface will always fit together precisely because of the ECM/PECM process.

Advantageously, the first part and the second part are parallel aligned with a gap of 120 µm ± 30 µm, preferably with a gap of 70 µm ± 20 µm, before the filling or wetting process. A capillary gap of 70 µm ± 20 µm is particularly preferred in order to achieve a higher degree of filling and/or wetting with braze alloy during the brazing process. Because of the continuous braze joint gap, an improved isothermal braze solidification can be achieved because the surface for interdiffusion of melting point depressing elements from the braze alloy into the two surfaces to be connected is increased by the microstructural element. This leads to a reduced risk of residual eutectic phase and void formation within the braze joint. Therefore, better mechanical properties such as better fatigue lifetime can be achieved. The faster isothermal solidification further leads to a reduced risk of displacement between the two surfaces or parts to be connected when cooling down.

In another aspect of the method for brazing or soldering, a braze paste and/or a braze foil is used to fill the braze joint gap. Preferably, the braze foil is a melt spun braze foil.

It is particularly preferred, when a bead of wide gap braze paste, particularly of a wide gap braze paste having a high viscosity, is applied to the outside split line of the braze joint gap. The bead of wide gap braze paste can then act as a gasket which impedes material loss of molten braze alloy by leakage. Moreover, the bead of wide gap braze paste can act as a reservoir to fill voids and pores.

In a further advantageous embodiment, ventilation holes are designed in the first and second part before the alignment. The binder of the braze paste needs to vaporize during the heating process. When ventilation or cooling air holes are provided in the first and second parts, the binder can vaporize through those ventilation or cooling air holes. After vaporization of the binder, the ventilation or cooling air holes can then be filled by braze alloy due to capillary effects. Therefore, the ventilation or cooling air holes can be closed preferably within the same brazing or soldering process.

Preferably, mechanical fastening devices, preferably clamps, grippers or chucks, are used to align the first and second part. The fastening devices create an additional force between the two adjacent parts/surfaces to be connected. Thus, no undesirable relative movement during the brazing process can occur. The fastening devices can be especially designed for the parts to be connected for example via 3D-printing. It is particularly preferred, when the brazing or soldering process is conducted directly after or during manufacturing the braze joint gap. The first and second part which have to be aligned for the ECM/PECM process can remain in the aligned position for the brazing or soldering process.

The above object is also achieved by a work piece according to claim 19. This work piece is consisting of at least two parts connected by brazing or soldering using a method according to any one of claims 13 to 18.

In the area of industrial gas turbines (IGT) all above described measures are important for the improvement of mechanical properties of the braze joint. Braze joints between IGT sections are usually thermally and mechanically highly loaded areas. Therefore, the above mentioned methods can be especially important for all areas, where a braze joint has to carry the full thermal and/or mechanical load without an additional mechanical interlock, but with mechanical interlock is also a good option.

Further advantages and details of the claimed invention are subsequently described in conjunction with the drawings and their description.
- Figure 1: is showing a turbine blade section;
- Figure 2: is showing a turbine blade section arranged on a turbine blade base member for repair o re-conception of the turbine blade;
- Figure 3: is showing a bottom view of the turbine blade section according to figure 1;

- Figure 4: is showing the turbine blade based member according to figure 2 without the turbine blade section;
- Figure 5: is showing a longitudinal cross-section of a turbine blade base member with a turbine blade section during an ECM/PECM process;
- Figure 6: is showing another cross section with a view along line A-A in figure 5;
- Figure 7: is showing different embodiments of turbine blade sections with different microstructural elements;
- Figure 8: is showing different sections of turbine blade sections with different embodiments of microstructural elements.

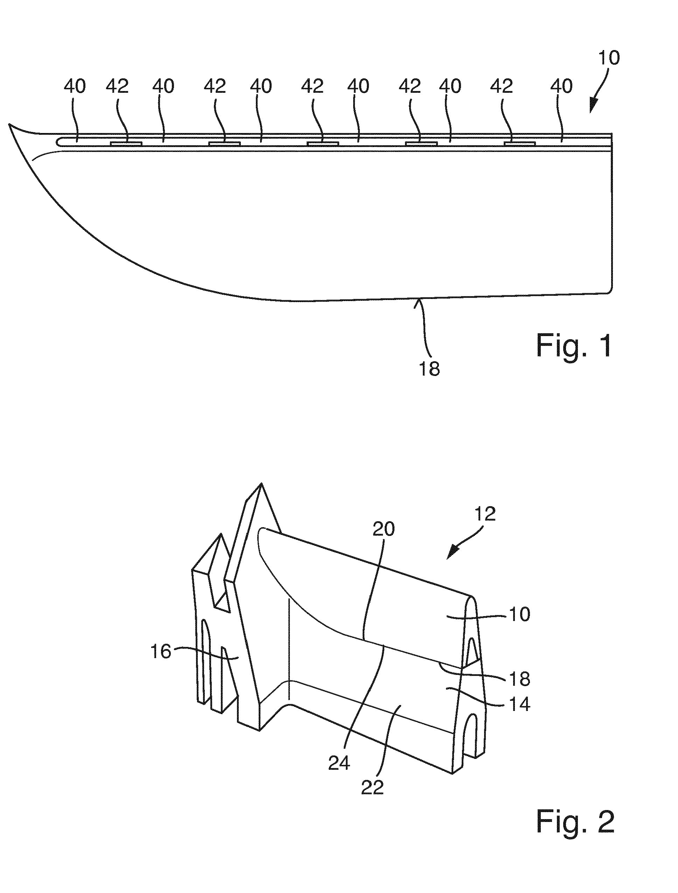

Figure 1 is showing a turbine blade section 10 which is often called coupon. Such coupons 10 are usually used to re-concept or repair ex-service parts of industrial gas turbines (IGT). In order to repair vanes or turbine blades of industrial gas turbines, the vanes or blades are machined such that a damaged part is removed and replaced by a new part. Turbine blade sections (coupons) 10 are therefore used in order to replace the damaged section.

Figure 2 is showing a detail of a turbine vane/turbine blade 12 wherein a turbine blade section 10 is removably attached to a turbine base member 14. This turbine base member is having a foot member 16 in order to mount the turbine blade/turbine vane in the industrial gas turbine. A first surface 18 of the turbine blade section 10 and a second surface 20 of the turbine base member are arranged such that the turbine blade/turbine vane has a hot gas exposed outer surface 22. However, it can be seen that the turbine blade section 10 and the turbine base member 14 are two separate parts, because they are separated by a split line 24.

In the state of the art, the turbine blade sections (coupons) 10 and the turbine base members 14 are mounted to each other via brazing or soldering or via welding the parts. However, brazing requires high precision when connecting the turbine blade sections 10 and the turbine base members 14. During the cooling down phase of the brazing/soldering process, there is often the problem that relative movements between the turbine blade section 10 and the turbine base member 14 occur. When welding the turbine blade section 10 to the turbine base member 14, thin walls and extended sections cannot be joined with the same quality and repeatability needed. Moreover, welding is leading to residual stress in the components.

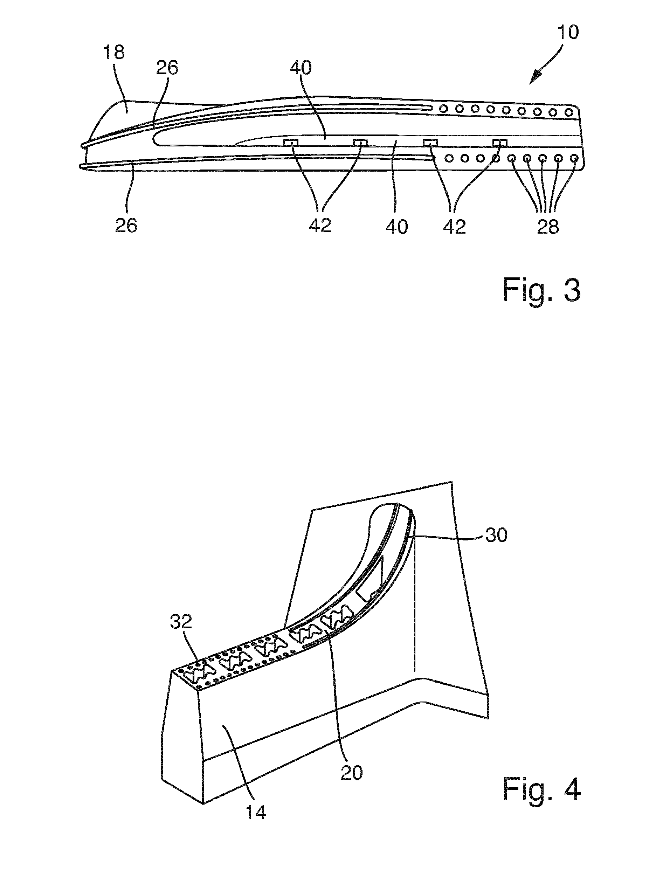

Therefore, a new method is described in order to connect the turbine blade section 10 to a turbine base member 14. According to the embodiment shown in figures 1 to 8, a turbine blade section 10, which is shown in figure 3 with a bottom view, is having several microstructural elements formed on the first surface 18. Those microstructural elements are preferably formed as as embossment lines 26 or cubical embossments 28. The microstructural elements 26, 28 are preferably arranged with a height of 30 to 200 µm from the first surface 18.

Those microstructural elements 26, 28 are used for the brazing or soldering process in order to improve the brazing process. It is preferred to form a homogenous continuous braze joint gap in order to braze together the turbine blade section 10 and the turbine base member 14. Therefore, it is preferred, to fabricate a negative form of the first surface 18 in the second surface 20 of the turbine base member.

Figure 4 is showing a turbine base member 14, wherein the second surface 20 has already been adapted to the first surface and is having a negative form of the first surface 18. The second surface 20 is having line recesses 30 and cubical recesses 32 corresponding to the embossment lines 26 and the cubical embossments 28.

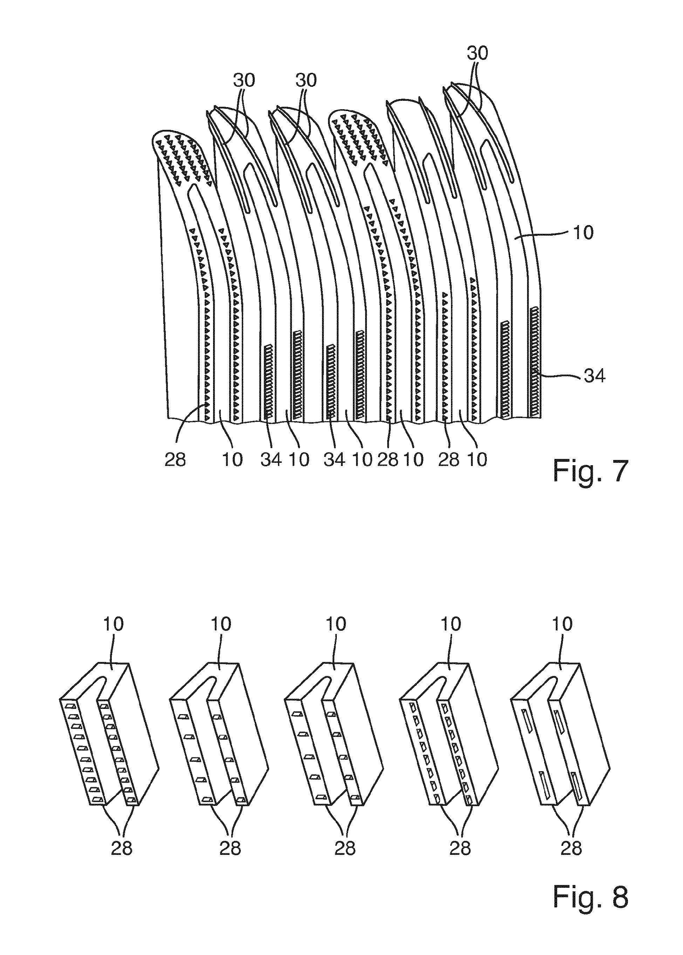

Further advantageous embodiments of microstructural elements such as other embossment lines 26 or cubical or pyramidal embossments are shown in figures 7 and 8. It is possible that a turbine blade section 10 only has embossment lines 26 or only has cubical embossments 28. However, a combination of both can also be done. The cubical embossments 28 can also be replaced by pyramidal or roof-shaped embossments 34 which are parallel aligned. As shown in figure 8, the embossments 28, 34 can be aligned parallel to the longitudinal axis of the turbine blade sections 10. It is also possible to arrange the cubical embossments 28 or pyramidal embossments 34 perpendicular to the longitudinal axis of the turbine blade section 10. The number of embossments 28, 34 can be varied depending upon the structure of the embossments 28, 34.

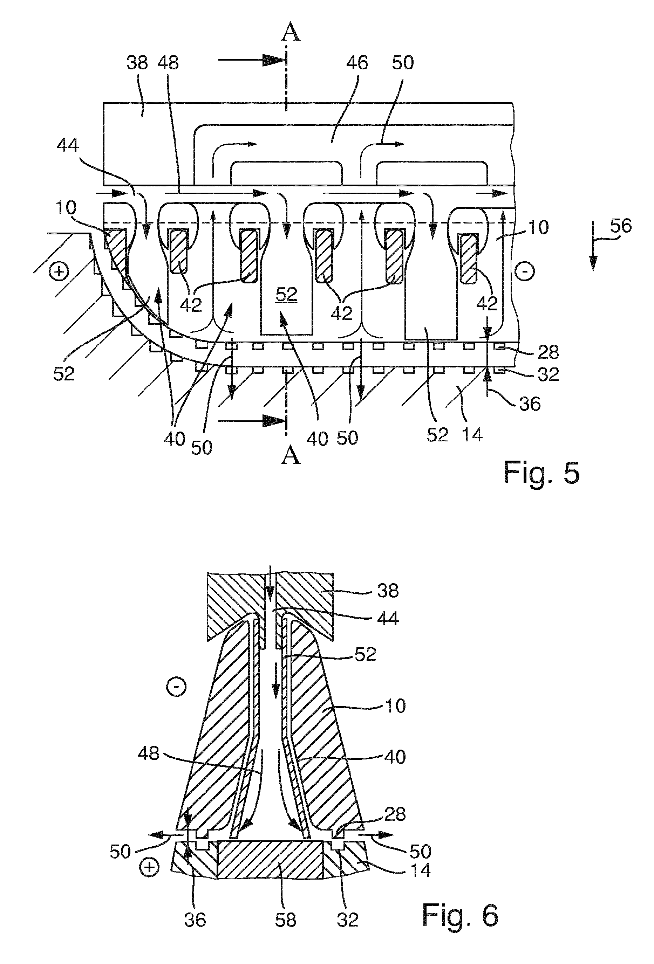

Coming back to figure 3, the embossments lines 26 and the cubical embossments 28, which represent the microstructural elements, are preferably added to the first surface 18 via selective laser melting (SLM). Selective laser melting (SLM) is an additive manufacturing process, wherein a high powered laser beam is used to create 3-dimensional metal parts by fusing fine metallic powders together. It is therefore also possible, to manufacture the whole turbine blade section (coupon) 10 via selective laser melting (SLM). The selective laser melting process is particularly preferred to manufacture the microstructural elements 26, 28, 34. In order to manufacture the negative form of the microstructural elements, the line recesses 30 and the cubical recesses 32, in the second surface 20 of the turbine base member 14, a new method is described in figures 5 and 6.

Figure 5 is showing a cross section of a turbine blade section 10 and a turbine base member 14 arranged on top of each other with a gap 36. In order to manufacture the negative form of the embossment lines 26 and the cubical embossments 28, an electro-chemical machining (ECM) process or a precise electro-chemical machining (PECM) process is conducted. The turbine blade section 10 is polarized as a cathode, wherein the turbine base member 14 is polarized as an anode. High current is passed between the turbine blade section 10 and the turbine base member 14, wherein an electrolytic material removal process is conducted. The turbine blade section 10 is used as a tool for the ECM/PECM process, wherein the turbine base member 14 is machined and material is removed from the turbine base member 14. A conductive fluid (electrolyte) preferably an aqueous NaCl or NaNO₃ solution or any combination thereof is used for the ECM/PECM process. In order to direct the electrolyte to the gap 36, a top frame 38 in the form of a ridge, which is made of plastic or a non-conductive material is adapted to the form of the turbine blade section 10. The turbine blade section 10 is having breakthroughs 40 and stiffening ribs 42. Available structures from part design are used as "channels" for electrolyte flow guidance to direct the electrolyte to the gap 36. The top frame 38 is designed such, that it comprises inlet channels 44 which direct the electrolyte to the gap 36, where material is removed from the second surface 20 of the turbine base member 14. The top frame 38 further comprises outlet channels 46, which lead away the electrolyte from the gap. The flow of electrolyte in the inlet channels 44 is marked by arrows 48, wherein the flow of electrolyte in the outlet channels 46 is marked by arrows 50. The top frame 38 is having inflow cannulas 52 which are fluidly connected to the inlet channels 44 and outflow cannulas 54, which are fluidly connected to the outlet channels 46. In figure 5 the inflow cannulas 52 and the outflow cannulas 54 are arranged in the breakthroughs 40 between the stiffening ribs 42. Electrolyte is guided through the inlet channels 44 and the inflow cannulas 52 to the gap 36 and then guided away through the outflow cannulas 54 and the outlet channels 46. During the ECM/PECM process, when material of the turbine base member 14, which is polarized as an anode, is dissolved in the electrolyte, an infeed movement of the turbine blade section is conducted, which is represented by arrow 56. Because of the ECM/PECM process, a negative form of the first surface 18 of the turbine blade section 10 with the embossments 28 is formed in the turbine base member 14. Therefore, cubical recesses 32 corresponding to the cubical embossments 28 are created.

Figure 6 is showing a view of a cross section along line A-A in figure 5 in the area of a breakthrough 40. Therefore, no stiffening rib 42 can be seen in the cross section of figure 6. The ridge like top-frame 38 is attached to the top of the turbine blade section 10. An electrolyte inflow cannula 52 is inserted into the breakthrough 40 and is guiding electrolyte to the gap 36 via arrows 48. The electrolyte inflow cannula 52 is connected to the top frame 38 via a plug connection. In figure 6, a masking plug 58 made of masking material is attached to the second surface 20 of the turbine base member 14. The masking plug 58 is attached prior to performing the ECM or PECM process, prohibits machining of the masked area and directs the electrolyte flow. However, in the section of the cubical embossments 28, there is no such masking plug 58. Therefore, the corresponding second surface 20 is machined by ECM/PECM process and cubical recesses 32 corresponding to the cubical embossments 28 are formed.

Via ECM/PECM it is possible to manufacture an exact negative form of the first surface 18 of the turbine blade section 10 having the embossments 26, 22, 34. The tolerances which can be reached are about ± 3 µm, wherein the roughness RA is smaller than 0,05 µm. An infeed movement along arrow 56 in figure 5 can be varied continuously between 0,1 to 2 mm/min. During the ECM/PECM process, all crucial process parameters, such as electrolyte concentration, fluid temperature and current or voltage are monitored. Because there is very low tool wear during ECM/PECM processes, the cutting tool, meaning the turbine blade section 10 is not eroded. Therefore, after conducting the ECM/PECM process, both the turbine blade section 10 and the turbine base member 14 are having a perfect surface, wherein microstructural elements 26, 28, 34 formed on the first surface 18 of the turbine blade section 10 are correspondingly formed as recesses 30, 32 in turbine base member 14.

When brazing or soldering the turbine blade section 10 and the turbine base member 14 together, the turbine blade section 10 and the turbine base member 14 are arranged in a continuous braze joint gap of about 120 µm ± 30 µm. A capillary gap of 70 µm ± 20 µm is preferred in order to achieve a higher degree of filling or wetting with braze alloy during the brazing process. Advantageously, a bead of wide gap braze pastes, particularly a wide gap braze paste having a high viscosity, can be applied to the outside split line 24 between the turbine blade section 10 and the turbine base member 14 in order to impede material loss of molten braze alloy by leakage and to act as a reservoir to fill voids and pores.

In order to control the galvanic material removal the cathodic coupon micro-features can locally be isolated by applying an electrically insulating top coating.

The disclosed joining method is especially beneficial for joining long and/or wide joints.

### List of reference numerals

- 10: turbine blade section (coupon)
- 12: turbine vane base
- 14: turbine base member
- 16: foot member
- 18: first surface
- 20: second surface
- 22: outer surface
- 24: split line
- 26: embossment lines
- 28: cubical embossments
- 30: line recesses
- 32: cubical recesses
- 34: roof-shaped embossments
- 36: gap
- 38: top-frame
- 40: breakthroughs
- 42: stiffening ribs
- 44: inlet channels
- 46: outlet channels
- 48: arrow
- 50: arrow
- 52: inflow channels
- 54: inflow channels
- 56: arrow
- 58: masking plug

## Claims

1. Method for manufacturing a braze joint gap (36) for connecting a first part (10) to a second part (14) via brazing or soldering, comprising the steps of:
- adding microstructural elements (26, 28, 34) to a first connecting surface (18) of the first part (10) to be connected to the second part (14) via brazing or soldering;
- aligning the second part (14) and the first part (10) or an electrode part having a tool contour, which is identical to the contour of the first connecting surface (18);
- electro-chemically machining (ECM) or precise electro-chemically machining (PECM) a second connecting surface (20) of the second part by polarizing the first part (10) or the electrode part as a cathode and the second part (14) as an anode.

2. Method according to claim 1, **characterized in that** selective laser melting (SLM) is used to add the microstructural elements (26, 28. 34) to the first part (10) and/or to manufacture the first part (10).

3. Method according to claim 1 or 2, **characterized in that** protrusions or recesses are formed on the first connecting surface (18) as microstructural elements (26, 28. 34).

4. Method according to one of the preceding claims, **characterized in that** the microstructural elements (26, 28. 34) are provided as rails, ribs, zigzag or staggered lines, continuous, discontinuous or dashed lines.

5. Method according to one of the preceding claims,
wherein electrolyte channels (40) are incorporated into the first part (10).

6. Method according to one of the preceding claims, **characterized in that** a top frame (38), preferably in the form of a ridge, made of plastic or a non-conductive material is adapted to the form of the first part (10) such that electrolyte can be directed to the gap (36) between the first connecting surface (18) and the second connecting surface (20).

7. Method according to claim 6, **characterized in that** the top frame (38) is manufactured via a generative manufacturing process.

8. Method according to one of the preceding claims, **characterized in that** the alignment is achieved by using geometrical, optical or numerical tools.

9. Method according to one of the preceding claims, **characterized in that** mechanical fastening devices, preferably clamps, grippers or chucks, are used to fasten the first (10) and second part (14).

10. Method according to one of the preceding claims, **characterized in that** the electro-chemical machining (ECM) process or the precise electro-chemical machining (PECM) process is carried out as a pulsed process, wherein the electric source is operated in a pulsed mode.

11. Method according to claim 10, **characterized in that** a mechanical oscillation is superimposed on the electric source pulsation.

12. Method according to one of the preceding claims, **characterized in that** a masking material (58) is applied to sections of the second connecting surface (20) prior to performing the ECM or PECM process.

13. Method for brazing or soldering together a first part (10) and a second part (14) comprising the steps of:
- manufacturing a braze joint gap (36) by using the method according to one of the preceding claims;
- filling or wetting the braze joint gap (36) with braze alloy.

14. Method for brazing or soldering according to claim 13, **characterized in that** the first part (10) and second part (14) are parallel aligned with a gap (36) of 120 µm ± 30 µm, preferably with a gap of 70 µm ± 20 µm, before the filling or wetting process.

15. Method for brazing or soldering according to claim 13 or 14, **characterized in that** a braze paste and/or a braze foil is used to fill the braze joint gap (36).

16. Method for brazing or soldering according to one of claims 13 to 15, **characterized in that** a bead of wide gap braze paste, particularly a wide gap braze paste having a high viscosity, is applied to the outside split line (24) of the braze joint gap (36).

17. Method for brazing or soldering according to one of claims 13 to 16, **characterized in that** ventilation holes (40) are designed in the first (10) and second part (14) before the alignment.

18. Method for brazing or soldering according to one of claims 13 to 17, **characterized in that** mechanical fastening devices, preferably clamps, grippers or chucks, are used to align the first (10) and second part (14).

19. Work piece (12) consisting of at least two parts (10, 14) connected by brazing or soldering using a method according to any one of claims 13 to 18.
